# EUROPÄISCHE PATENTSCHRIFT

(11) **EP 0 532 847 B1**
(45) Veröffentlichungstag und Bekanntmachung des Hinweises auf die Patenterteilung: **04.01.1995**
(21) Anmeldenummer: 92111349.4
(22) Anmeldetag: 03.07.1992
(51) Int. Cl.: B60T 8/00, B60T 13/66

(54) **Verfahren zur Abbremsung eines Fahrzeugs**
Method for braking of a vehicle
Procédé de freinage d'un véhicule

(30) Priorität: 19.09.1991 DE 4131169
(43) Veröffentlichungstag der Anmeldung: 24.03.1993
(73) Patentinhaber: WABCO STANDARD GmbH, D-53008 Bonn (DE)
(72) Erfinder: Feldmann, Joachim, W-3057 Neustadt 2 (DE)
(74) Vertreter: Schrödter, Manfred, Dipl.-Ing.

(56) Entgegenhaltungen:
- EP-A- 0 336 046
- EP-A- 0 429 066
- DE-A- 2 327 508
- DE-A- 2 419 242
- DE-A- 3 502 825
- DE-B- 1 018 448
- PATENT ABSTRACTS OF JAPAN vol. 9, no. 176 (M-398)(1899) 20. Juli 1985

## Beschreibung

Die Erfindung betrifft ein Verfahren zur Abbremsung eines Fahrzeugs gemäß dem Oberbegriff des Patentanspruchs 1 und eine Bremsanlage zur Durchführung des Verfahrens gemäß dem Oberbegriff des Patentanspruchs 3.

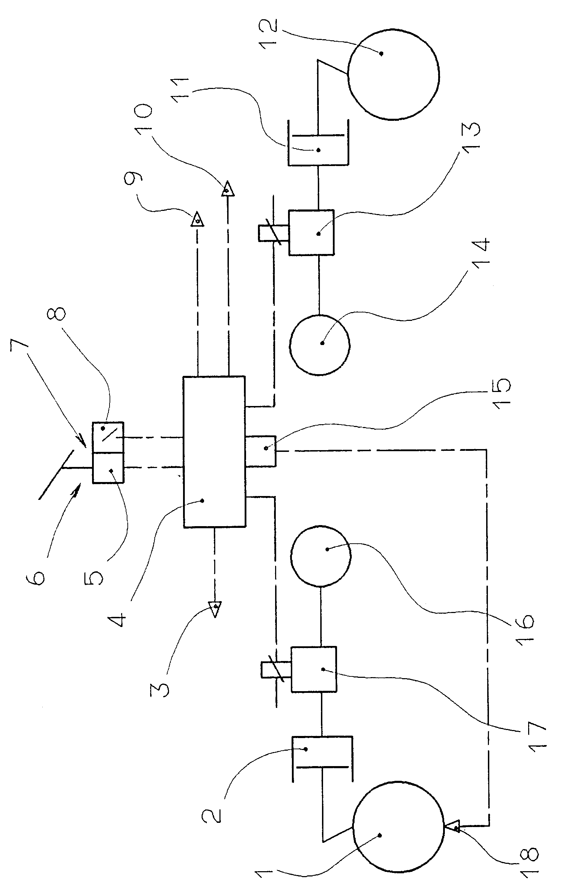

Ein derartiges Verfahren ist in der EP-A-0 429 066, in der DE-A-24 19 242 im Zusammenhang mit der Fig. 3, in der DE-A-23 27 508 sowie in der DE-A-35 02 825 im Zusammenhang mit der Fig.2 beschrieben. Eine nach diesem Verfahren arbeitende Bremsanlage wird als "verzögerungsgeregelte Bremsanlage" bezeichnet. In einer solchen Bremsanlage bewirkt die Steuereinheit mittels des Bremsen-Betätigungssignals und wenigstens eines auf dieses reagierenden Energieverteilers eine Energiezufuhr zu wenigstens einer Radbremse, solange das Ist-Fahrzeugverzögerungssignal von dem Fahrzeugverzögerungs-Anforderungssignal abweicht.

Auf einer Hangabfahrt wirkt auf ein Fahrzeug eine Hangabtriebskraft, die das Fahrzeug, wenn es nicht durch andere Mittel abgebremst wird, beschleunigt, d.h. negativ verzögert. Bei Betätigung der bekannten verzögerungsgeregelten Bremsanlagen kann der Fahrzeugführer mittels des Verzögerungsgebers nur ein Fahrzeugverzögerungs-Anforderungssignal für eine von 0 abweichende positive Fahrzeugverzögerung erzeugen. Die Steuereinheiten der Bremsanlagen nach den DE-A-23 27 508 oder 35 02 825 geben dann das Bremsen-Betätigungssignal so lange ab, bis sie von der Verzögerungssensoreinrichtung ein entsprechendes Ist-Fahrzeugverzögerungssignal erhalten. Das bedeutet, daß ein mit einer derartigen verzögerungsgeregelten Bremsanlage ausgerüstetes Fahrzeug durch diese Bremsanlage auf einer Hangabfahrt nicht auf eine Verzögerung 0, d.h. eine konstante Geschwindigkeit, abbremsbar ist.

Das von der Bremsanlage nach der EP-A-0 429 066 verwirklichte Verfahren läßt auf einer Hangabfahrt mit betätigter Bremsanlage bis zu einem Grenzwert des Fahrzeugverzögerungs-Anforderungssignals eine Beschleunigung, also eine negative Verzögerung, des Fahrzeugs zu. Allerdings begrenzt dieses Verfahren die zugelassene Beschleunigung auf immer kleinere Werte, je mehr das Fahrzeugverzögerungs-Anforderungsignal sich dem Grenzwert nähert. Erst von dem genannten Grenzwert ab setzt dieses Verfahren die Verzögerungsregelung ein.

Das von der Bremsanlage nach der DE-A-24 19 242 verwirklichte Verfahren setzt auf einer Hangabfahrt mit unbetätigter Bremsanlage und ohne Antriebskraft zur Konstanthaltung der Geschwindigkeit eine Geschwindigkeitsregelung ein, die durch gleichzeitiges Nichtbetätigen des Verzögerungsgebers und des Fahrpedals (Gaspedals) in Gang gesetzt wird.

Der Erfindung liegt die Aufgabe zugrunde, ein Verfahren der aus der EP-A-0 429 066 bekannten Art zur Abbremsung eines Fahrzeugs mit einfachen Mitteln derart weiterzubilden, daß es auf einer Hangabfahrt die Abbremsung des Fahrzeugs auf eine konstante Geschwindigkeit ermöglicht.

Diese Aufgabe wird durch die in dem Patentanspruch 1 bzw. 3 angegebene Erfindung gelöst. Vorteilhafte Fortbildungen und eine Bremsanlage zur Durchführung der Erfindung sind in den Unteransprüchen angegeben.

Ein mit einer Bremsanlage nach den DE-A-23 27 508 oder 35 02 825 ausgerüstetes Fahrzeug ist mit dieser Bremsanlage auf einer Hangabfahrt auch nicht ruckfrei abbremsbar, weil es schon bei geringfügigster Betätigung der Bremsanlage - d.h. schon bei einem sehr kleinen Fahrzeugverzögerungs-Anforderungssignal - aus seiner beschleunigten Fahrt in den Bereich verzögerte Fahrt sozusagen "hinübergerissen" wird. Diesen Nachteil beseitigt die Erfindung.

Auf einer antriebslosen und ungebremsten Hangauffahrt, beispielsweise während der Fahrzeugführer vom Gasgeben auf Bremsen umschaltet, verzögert die Hangabtriebskraft das Fahrzeug mit einem entsprechenden Ist-Fahrzeugverzögerungssignal der Verzögerungssensoreinrichtung als Folge. Bei Betätigung der bekannten verzögerungsgeregelten Bremsanlagen erzeugt die Steuereinheit solange kein Bremsen-Betätigungssignal wie der Fahrzeugführer kein Fahrzeugverzögerungs-Anforderungssignal für eine höhere als die vorhandene Fahrzeugverzögerung erzeugt.

Die Bremsanlage bleibt solange wirkungslos. Der Fahrzeugführer betätigt die Bremsanlage solange "leer" und hat solange das Gefühl versagender Bremsanlage. Auch diese Nachteil beseitigt die Erfindung.

In einem mit einer bekannten verzögerungsgeregelten Bremsanlage ausgerüsteten Fahrzeug sind beim Betätigen der Bremsanlage unter bestimmten Umständen die Wechselwirkungen zwischen dem Fahrzeugführer und dem Fahrzeug in anderer Weise von der Betätigungskraft oder dem Betätigungsweg abhängig als sie der Fahrzeugführer von einem mit einer herkömmlichen zuspannenergiegeregelten Bremsanlage ausgerüsteten Fahrzeug gewohnt ist. Solche Wechselwirkungen sind beispielsweise Abstützkräfte des Fahrzeugführers an Lenkrad, Fahrersitz, Sicherheitsgurt, Fahrerhausboden.

In einer herkömmlichen zuspannenergiegeregelten, beispielsweise druckgeregelten, Bremsanlage erzeugt der Fahrzeugführer durch die Betätigungskraft oder den Betätigungsweg auf einen Geber ein Energie-Anforderungssignal, zu passend dem geeignete Energieregeleinrichtungen eine Zuspannernergie einregeln. Der Fahrzeugführer eines mit einer solchen Bremsanlage ausgerüsteten Fahrzeugs erlernt gefühlsmäßig die Zusammenhänge zwischen den genannten Wechselwirkungen und der sich einstellenden Fahrzeugverzögerung. Auf einer antriebslosen und ungebremsten Hangauffahrt wirkt auf das Fahrzeug und damit auf den Fahrzeugführer die verzögernde Hangabtriebskraft, ohne daß der Fahrzeugführer eine Wechselwirkung zum Fahrzeug empfindet. Nur die bei einer Betätigung der Bremsanlage auftretende zusätzliche Fahrzeugverzögerung ruft vom Fahrer wahrgenommene Wechselwirkungen hervor. Diese sind gegenüber einer Betätigung der Bremsanlage in der Ebene unverändert. Auf einer antriebslosen und ungebremsten Hangabfahrt wirkt auf das Fahrzeug und den Fahrzeugführer die beschleunigende Hangabtriebskraft, ohne bei dem Fahrzeugführer zur Wahrnehmung von Wechselwirkungen mit dem Fahrzeug zu führen. Auch in diesem Fall empfindet der Fahrzeugführer beim Betätigen der Bremsanlage die erlernten Zusammenhänge. Diese Feststellung gilt auch für Bremsungen, in denen die Hangabtriebskraft die auftretende Bremskraft überwiegt, Fahrzeug und Fahrer also trotz Betätigung der Bremsanlage noch schneller werden.

In einem mit der bekannten verzögerungsgeregelten Bremsanlage ausgerüsteten Fahrzeug erzeugt auf der antriebslosen und ungebremsten Hangauffahrt die Verzögerungssensoreinrichtung ein Ist-Fahrzeugverzögerungssignal, welches der von der Hangabtriebskraft hervorgerufenen Fahrzeugverzögerung entspricht. Betätigt der Fahrzeugführer nunmehr die Bremsanlage, so besorgt die Steuereinheit die Zufuhr von nur so viel Zuspannenergie zu der Radbremse wie zum Ausgleich der Differenz zwischen dem auf der Hangabtriebskraft beruhenden ist-Fahrzeugverzögerungssignal und dem Fahrzeugverzögerungs-Anforderungssignal erforderlich ist. Nur die auf dieser Zusatzverzögerung beruhenden Wechselwirkungen nimmt der Fahrzeugführer wahr. Er empfindet deshalb bei Hangauffahrt seine Bremsanlage als schlecht. Bei Betätigung der Bremsanlage auf der antriebslosen und ungebremsten Hangabfahrt hingegen nimmt der Fahrzeugführer auch die Wechselwirkungen wahr, die zusätzlich zu den dem Fahrzeugverzögerungs-Anforderungssignal entsprechenden auf der Neutralisation der vor Bremsbeginn wirkenden beschleunigenden Hangabtriebskraft beruhen. Deshalb empfindet der Fahrzeugführer bei der Hangabfahrt seine Bremsanlage als sehr gut.

Unterschiedliche Wechselwirkungen bedeuten nicht nur eine Komforteinbuße, sondern erschweren dem Fahrer, ein Gefühl für die Abhängigkeit zwischen Betätigungskraft bzw. Betätigungsweg und sich einstellender Fahrzeugverzögerung zu entwickeln. Als Folge fällt es dem Fahrzeugführer schwerer, etwaige Fehler in der Bremsanlage am Bremsverhalten zu erkennen.

Die Erfindung beseitigt die vorstehend herausgearbeiteten Nachteile bzw. Unterschiede der beim Betätigen der verglichenen Bremsanlagen auftretenden Wechselwirkungen. Treten bei der erfindungsgemäßen Bremsanlage Veränderungen der gewohnten Wechselwirkungen auf, so deutet diese auf eine Störung in deren elektrischen Bauteilen hin.

Weitere Vorteile der Erfindung werden in deren nunmehr folgender Erläuterung anhand einer in einer Figur schematisch dargestellten verzögerungsgeregelten Bremsanlage genannt. In der Figur sind Energieleitungen mit durchgezogenen Linien und Signalleitungen mit strichpunktierten Linien dargestellt.

Die Bremsanlage besteht in der Grundausführung aus einem elektrischen Verzögerungsgeber (5), einem elektrischen Bremsbeginnsignalgeber (8), einer elektrischen Steuereinheit (4), einer elektrischen Verzögerungssensoreinrichtung (3 oder 15, 18) und einem Bremskreis (1, 2, 16, 17). Die Ausgänge des Verzögerungsgebers (5), des Bremsbeginnsignalgebers (8) und der Verzögerungssensoreinrichtung (3 bzw. 15, 18) sind mit Eingängen der Steuereinheit (4) verbunden.

Der Bremskreis (1, 2, 16, 17) besteht aus einer Energiequelle (16), einem Energieverteiler (17), einer Zuspanneinrichtung (2) und einer Radbremse (1). Die Energiequelle (16) stellt Energie mit einem "Vorratsenergie" genannten Energieniveau zur Verfügung.

Der Bremskreis kann für jede geeignete Energieart ausgelegt sein. Beispielhaft seien Dmck oder elektrische Energie genannt. Im Falle von Druck können geeignete gasförmige Druckmittel, beispielsweise Druckluft, oder flüssige Druckmittel als Energieträger Verwendung finden. In diesem Falle können in bekannter Weise die Energiequelle (16) ein Druckerzeuger oder ein von einem Druckerzeuger gespeister Druckmittelspeicher, der Energieverteiler (17) eine Ventileinrichtung, beispielsweise ein geeignetes Ventil aus der Blockierschutztechnik, und die Zuspanneinrichtung (2) ein Bremszylinder sein.

Der elektrisch betätigbare Energieverteiler (17) ist einerseits mit der Energiequelle (16) und andererseits mit der Zuspanneinrichtung (2) verbunden. Seine elektrische Betätigungseinrichtung ist mit einem Ausgang der Steuereinheit (4) verbunden. Der Energieverteiler (17) führt bei Erhalt eines Bremsen-Betätigungssignals im Bremssinn von der Steuereinheit (4) der Zuspanneinrichtung (2) Energie aus der Energiequelle (16) zu, wobei sich in der Zuspanneinrichtung (2) eine Zuspannenergie aufbaut oder eine vorhandene Zuspannenergie erhöht. Der erreichbare Höchstwert dieser Zuspannenergie ist die Vorratsenergie. Beim Erhalt eines Bremsen-Betätigungssignals im Lösesinn von der Steuereinheit (4) läßt der Energieverteiler (17) die Zuspannenergie, je nach Dauer des Bremsen-Betätigungssignals, teilweise oder vollständig abfallen. Im Falle von Luft als Druckmittel geschieht dabei üblicherweise eine Entlüftung in die Atmosphäre.

Der Verzögerungsgeber (5) wird vom Fahrzeugführer mittels einer Stelleinrichtung (6), zu der üblicherweise ein Pedal gehört, betätigt. Der Verzögerungsgeber (5) gibt bei Betätigung ein Fahrzeugverzögerungs-Anforderungssignal ab, dessen Wert von der Größe der zugeführten Betätigungskraft oder dem Betätigungsweg abhängt. Als Verzögerungsgeber (5) kann jeder geeignete elektrische Bremswertgeber Verwendung finden.

Die Verzögerungssensoreinrichtung (3 bzw. 15, 18) erfaßt die jeweils vorhandene Fahrzeugverzögerung des mit der Bremsanlage ausgerüsteten Fahrzeugs und erzeugt ein entsprechendes Ist-Fahrzeugverzögerungssignal. Als Verzögerungssensoreinrichtung kommt jede geeignete Einrichtung in Betracht. Im Ausführungsbeispiel sind zwei Alternativen angegeben. Die erste Alternative, symbolisiert durch (3), wertet die transversale Fahrzeuggeschwindigkeit aus. Die Zweite Alternative (15, 18) setzt einen Drehwegsensor (18) an dem oder einem der Radbremse (1) zugeordneten Fahrzeugrad und eine Differenziereinrichtung (15) ein, die das Signal des Drehwegsensors (18) zweimal nach der Zeit differenziert und somit aus diesem Signal das Ist-Fahrzeugverzögerungssignal bildet. Schaltungen elektrischer Bauelemente, die als derartige Differenziereinrichtung eingesetzt werden können, sind dem Fachmann geläufig. Vorliegend ist die Differenziereinrichtung (15) an die Steuereinheit (4) angebaut dargestellt, weil es üblich ist, solche Differenziereinrichtungen in andere elektronische Baueinheiten zu integrieren. Die den Drehwegsensor (18) verwendende Alternative ist insbesondere dann vorteilhaft, wenn das Fahrzeug auch mit einer Blockierschutzanlage ausgerüstet ist, da Drehwegsensoren, aber auch Differenziereinrichtungen, erforderlicher Arten aus der Blockierschutztechnik vorhanden sind.

Der Bremsbeginnsignalgeber (8) wird von dem Fahrzeugführer betätigt, bevor der Verzögerungsgeber (5) ein Fahrzeugverzögerungs-Anforderungssignal abgibt. Als Bremsbeginnsignalgeber (8) kommt jede geeignete Einrichtung in Betracht. Es hat sich jedoch als vorteilhaft einfach herausgestellt, den Bremsbeginnsignalgeber (8) mit dem Verzögerungsgeber (5) baulich zu vereinigen. Dadurch kann der Bremssignalgeber (8) von der Stelleinrichtung (6) des Verzögerungsgebers (5) mitbetätigt werden. Die aus beiden Gebern entstehende Baugruppe ist als Kombigeber (7) dargestellt. Bildlich ist der Bremsbeginnsignalgeber (8) als Schalter angedeutet, der das Bremsbeginnsignal durch Schließen oder Öffnen eines teilweise in der Steuereinheit (4) angeordneten elektrischen Kreises erzeugt.

In der Steuereinheit (4) sind bekannte elektronische Bauelemente in bekannter Weise so zusammengeschaltet, daß die Steuereinheit (4) die in der nunmehr folgenden Funktionsbeschreibung aufgeführten Wirkungen erbringt.

Zur Betätigung der Bremsanlage wirkt der Fahrzeugführer mittels der Stelleinrichtung (6) auf den Kombigeber (7) ein. Dabei erzeugt der Fahrzeugführer zunächst mittels des Bremsbeginnsignalgebers (8) das Bremsbeginnsignal, anschließend mittels des Verzögerungsgebers (5) ein Fahrzeugverzögerungs-Anforderungssignal, dessen Wert der Fahrzeugführer durch die Betätigungskraft auf die Stelleinrichtung (6) oder den Betätigungsweg der Stelleinrichtung (6) bestimmt.

Die Steuereinheit (4) erfaßt bei Erhalt des Bremsbeginnsignals das gerade von der Verzögerungssensoreinrichtung (3 bzw. 15, 18) erzeugte Ist-Fahrzeugverzögerungssignal als Anfangs-Fahrzeugverzögerungsslgnal, z.B. durch Zwischenspeicherung. Während des anschließenden Erhalts eines Fahrzeugverzögerungs-Anforderungssignals bildet die Steuereinheit (4) jeweils die Summe aus diesem Signal und dem Anfangs-Fahrzeugverzögerungssignal und gibt an ihrem Ausgang ein Bremsen-Betätigungssignal im Bremssinn ab. Daraufhin führt der Energieverteiler der Zuspanneinrichtung (2) Energie zu. Dadurch baut sich in der Zuspanneinrichtung (2) eine Zuspannenergie auf, welche die Erzeugung einer entsprechenden Bremskraft durch die Radbremse (1) und damit einer entsprechenden Fahrzeugverzögerung zur Folge hat. Die Verzögerungssensoreinrichtung (3 bzw. 15, 18) mißt diese Fahrzeugverzögerung und erzeugt ein entsprechendes Ist-Fahrzeugverzögerungssignal. Sind die Zuspannenergie und damit die Bremskraft und die Fahrzeugverzögerung so groß, daß das Ist-Fahrzeugverzögerungssignal gleich der Summe aus dem Anfangs-Fahrzeugverzögerungssignal und dem vom Fahrzeugführer jeweils erzeugten Fahrzeugverzögerungs-Anforderungssignal ist, stellt die Steuereinheit (4) das BremsenBetätigungssignal in ein Bremsen-Haltesignal um, wodurch der Energieverteiler (17) die Energiezufuhr zu der Zuspanneinrichtung (2) abbricht, die vorhandene Zuspannenergie aber hält. Das Fahrzeug wird nunmehr mit der vom Fahrzeugführer durch Bestimmung des Fahrzeugverzögerungs-Anforderungssignals gewünschten Fahrzeugverzögerung abgebremst.

Fallen jetzt aus irgendeinem Grund bei gleichbleibendem Fahrzeugverzögerungs-Anforderungssignal die Fahrzeugverzögerung und damit das Ist-Fahrzeugverzögerungssignal ab, so stellt die Steuereinheit (4) wieder auf das Bremsen-Betätigungssignal im Bremssinn um, bis aufgrund der dadurch möglichen Erhöhung der Zuspannenergie in der Zuspanneinrichtung (2) das Ist-Fahrzeugverzögerungssignal wieder der Summe aus dem Anfangs-Fahrzeugverzögerungssignal und dem vom Fahrzeugführer erzeugten Fahrzeugverzögerungs-Anforderungssignal entspricht. Steigt während der Bremsbetätigung das Ist-Fahrzeugverzögerungssignal bei gleichbleibendem Fahrzeugverzögerungs-Anforderungssignal aus irgendeinem Grund an, so stellt die Steuereinheit (4) das Bremsen-Haltesignal in das Bremsen-Betätigungssignal im Lösesinn um, woraufhin der Energieverteiler (17) die Zuspannenergie bis zur Wiederherstellung der Übereinstimmung des Ist-Fahrzeugverzögerungssignals mit der Summe aus dem Anfangs-Verzögerungssignal und dem vom Fahrzeugführer erzeugten Fahrzeugverzögerungs-Anforderungssignal abfallen läßt. Will der Fahrzeugführer die Bremsbetätigung beenden bzw. die Fahrzeugverzögerung mindern, so gibt er die Stelleinrichtung (6) frei bzw. setzt die Betätigungskraft oder den Betätigungsweg herab. Die Steuereinheit (4) stellt dann auf das Bremsen-Betätigungssignal im Lösesinn um bis zur vollständigen Energieentlastung der Zuspanneinrichtung (2) bzw. bis zur Angleichung des Ist-Fahrzeugverzögerungssignals an die nunmehr geltende Summe aus dem Anfangs-Fahrzeugverzögerungssignal und dem Fahrzeugverzögerungs-Anforderungssignal.

Nach dieser grundsätzlichen Erläuterung der Funktionsweise der Bremsanlage sei angenommen, daß das Fahrzeug sich mit einer Beschleunigung (d. h. einer negativen Fahrzeugverzögerung von 0,1g) auf einer Hangabfahrt befinde. Die verzögerungssensoreinrichtung (3 bzw. 16, 18) erzeugt dann ein Ist-Verzögerungssignal für -0,1g. Betätigt der Fahrzeugführer jetzt die Bremsanlage, so erfaßt die Steuereinheit (4) dieses Ist-Fahrzeugverzögerungssignal als Anfangs-Fahrzeugverzögerungssignal. Will der Fahrzeugführer das Fahrzeug nun auf konstante Geschwindigkeit abbremsen, so muß er mittels des Verzögerungsgebers (5) ein Fahrzeugverzögerungs-Anforderungssignal für +0,1g erzeugen. Die Steuereinheit (4) stellt dann mittels des Bremsen-Betätigungssignals und, gegebenenfalls, des Bremsen-Haltesignals eine Zuspannenergie in der Zuspanneinrichtung (2) ein, bei der sich ein Ist-Verzögerungssignal für -0,1g +0,1g = 0 und damit eine konstante Geschwindigkeit einstellen. Die Bremsanlage ermöglicht also dem Fahrzeug eine Hangabbfahrt mit konstanter Geschwindigkeit, obwohl der Verzögerungsgeber nur für eine von 0 abweichende positive Fahrzeugverzögerung Fahrzeugverzögerungs-Anforderungssignale abzugeben in der Lage ist.

Nun sei angenommen, der Fahrzeugführer wolle auf der Hangabfahrt das Fahrzeug nicht auf konstante Geschwindigkeit verzögern sondern die vorhandene Beschleunigung von 0,1g nur reduzieren, beispielsweise auf 0,05g. Auch dies ermöglicht die Bremsanlage. Der Fahrzeugführer muß zu diesem Zweck mittels des Verzögerungsgebers (5) ein Fahrzeugverzögerungs-Anforderungssignal für +0,05g erzeugen. Die Steuereinheit (4) stellt dann die Zuspannenergie in der Zuspanneinrichtung (2) so ein, daß die Verzögerungssensoreinrichtung (3 bzw. 15, 18) ein Ist-Fahrzeugverzögerungssignal für -0,1g +0,05g = -0,05g erzeugt. Dieser Fall illustriert die fein dosierbare Einsetzbarkeit der Bremsanlage und damit deren Fähigkeit, das Fahrzeug bei der Hangabfahrt ruckfrei zu bremsen.

Nun sei angenommen, das Fahrzeug befinde sich auf einer Hangauffahrt und werde durch die Hangabtriebskraft mit +0,1g verzögert. Will jetzt der Fahrzeugführer die Fahrzeugverzögerung erhöhen, beispielsweise um +0,05g, so erzeugt er ein Fahrzeugverzögerungs-Anforderungssignal für +0,05g. Die Steuereinheit (4) stellt dann mittels des Bremsen-Betätigungssignals und gegebenenfalls, des Bremsen-Haltesignals die Zuspannenergie in der Zuspanneinrichtung (2) so ein, daß die Verzögerungssensoreinrichtung (3 bzw. 15, 18) ein Ist-Fahrzeugverzögerungssignal für +0,1g +0,05g = 0,15g erzeugt. Dieser Fall illustriert, daß die Bremsanlage auf der Hangauffahrt eine fein dosierbare Aufstockung der Fahrzeugverzögerung ohne Leerbetätigung gewährleistet.

In den abgehandelten Beispielsfällen nimmt der Fahrzeugführer die gleichen Wechselwirkungen wahr wie bei demselben Fahrzeugverzögerungs-Anforderungssignal in der Ebene.

Aufgrund ihrer beschriebenen Wirkungen bietet die Bremsanlage ein Verfahren zur Abbremsung eines Fahrzeugs mit unter anderen den Vorteilen, die in der Beschreibungseinleitung genannt sind.

Als eine Fortbildungsmöglichkeit der bisher erläuterten Grundausführung zeigt die Figur einen zweiten Bremskreis (11, 12, 13, 14), in welchem eine Energiequelle (14), ein Energieverteiler (13), eine Zuspanneinrichtung (11) und eine Radbremse (12) wie die entsprechenden Bauteile des Bremskreises (1, 2, 16, 17) der Grundausführung betätigt werden und wirken. Für beide Bremskreise gilt, daß mehrere Radbremsen vorhanden sein können. Diesen können jeweils eigene Zuspanneinrichtungen, aber auch eine gemeinsame Zuspanneinrichtung zugeordnet sein. Falls mehrere Zuspanneinrichtungen vorgesehen sind, können diesen ein gemeinsamer Energieverteiler oder jeweils ein eigener Energieverteiler zugeordnet sein. Auch ist möglich, daß innerhalb der Gesamtzahl der Zuspanneinrichtungen Gruppen gebildet sind, denen jeweils ein Energieverteiler zugeordnet ist.

In nicht dargestellter Weise kann zu der Verzögerungssensoreinrichtung auch ein Drehwegsensor gehören, der einem Rad des der Fortbildung dienenden Bremskreises (11, 12, 13, 14) zugeordnet ist. Auch können zu der Verzögerungssensoreinrichtung Drehwegsensoren an mehreren Rädern gehören, deren Signale die Differenziereinrichtung (15) vor dem Differenzieren mittelt oder aus deren Signalen die Differenziereinrichtung (15) jeweils ein eigenes Ist-Fahrzeugverzögerungssignal bildet, für die die Steuereinheit (4) Vorrangschaltungen oder mittelwertbildende Schaltungen enthalten kann.

Als weitere Fortbildung zeigt die Figur einen Lastsensor (10), dessen Signal einem Eingang der Steuereinheit (4) zugeführt wird. Die Steuereinheit (4) kann in diesem Falle so fortgebildet sein, daß sie eine lastverteilungsabhängige Bremsenergieverteilung auf die dargestellten Zuspanneinrichtungen (2, 11) bzw. die weiteren etwa vorhandenen Zuspanneinrichtungen der Bremskreise besorgt.

Durch einen weiteren Sensor (9) sind weitere Fortbildungsmöglichkeiten angedeutet, in denen die Steuereinheit (4) weitere Fahrzeugparameter bei der Bremsenergieverteilung auf die Zuspanneinrichtungen berücksichtigt. Solche Parameter können beispielsweise Radbremstemperaturen, Verschleißwerte vorhandene Wirkungen einer Dauerbremseinrichtung usw. sein.

In nicht dargestellter Weise kann die beschriebene Bremsanlage mit einer Blockierschutzanlage zusammenarbeiten bzw. in eine solche integriert sein.

Der Fachmann erkennt, daß sich der Schutzbereich der vorliegenden Erfindung nicht in dem Ausführungsbeispiel erschöpft, sondern alle Ausgestaltungen umfaßt, deren Merkmale sich den Patentansprüchen unterordnen.

## Patentansprüche

1. Verfahren zur Abbremsung eines Fahrzeugs, in welchem bei einer Bremsung
a) der Fahrer mittels eines Verzögerungsgebers (5) ein Fahrzeugverzögerungs-Anforderungssignal erzeugt,
b) eine Verzögerungssensoreinrichtung (3 oder 15, 18) ein Ist-Fahrzeugverzögerungssignal erzeugt,
c) das Fahrzeugverzögerungs-Anforderungssignal und das Ist-Fahrzeugverzögerungssignal einer Steuereinheit (4) zugeführt werden,
d) die Steuereinheit (4) ein Bremsen-Betätigungssignal abgibt,
dadurch gekennzeichnet, daß
e) der Fahrer bei Beginn der Bremsung ein Bremsbeginnsignal erzeugt,
f) das Bremsbeginnsignal der Steuereinheit (4) zugeführt wird,
g) die Steuereinheit (4) bei Erhalt des Bremsbeginnsignals das gerade vorhandene Ist-Fahrzeugverzögerungssignal als Anfangs-Fahrzeugverzögerungssignal erfaßt,
h) die Steuereinheit (4) die Summe aus dem Fahrzeugverzögerungs-Anforderungssignal und dem Anfangs-Fahrzeugverzögerungssignal bildet,
i) die Steuereinheit (4) das Bremsen-Betätigungssignal bei einer Abweichung zwischen dem Ist-Fahrzeugverzögerungssignal und der Summe aus dem Fahrzeugverzögerungs-Anforderungssignal und dem Anfangs-Fahrzeugverzögerungssignal abgibt.

2. Verfahren nach Anspruch 1, dadurch gekennzeichnet, daß die Verzögerungssensoreinrichtung (15,18) das Ist-Fahrzeugverzögerungssignal aus dem Drehwegsignal wenigstens eines den Drehweg eines Fahrzeugrades erfassenden Drehwegsensors (18) bildet.

3. Bremsanlage zur Durchführung des Verfahrens nach einem der vorhergehenden Ansprüche, enthaltend
a) einen vom Fahrer zur Abgabe eines Fahrzeugverzögerungs-Anforderungssignals betätigten Verzögerungsgeber (5),
b) eine die jeweils vorhandene Fahrzeugverzögerung erfassende und ein entsprechendes Ist-Fahrzeugverzögerungssignal erzeugende Verzögerungssensoreinrichtung (3 oder 15, 18),
c) eine mit dem Verzögerungsgeber (5) und der Verzögerungssensoreinrichtung (3 oder 15, 18) verbundene und ein Bremsen-Betatigungssignal abgebende Steuereinheit (4),
gekennzeichnet durch die Merkmale:
e) es ist ein vom Fahrer bei Beginn einer Bremsung zur Abgabe eines Bremsbeginnsignals betätigter Bremsbeginnsignalgeber (8) vorgesehen;
f) die Steuereinheit (4) ist mit dem Bremsbeginnsignalgeber (8) verbunden und derart ausgebildet, daß sie
fa) bei Erhalt eines Bremsbeginnsignals das gerade vorhandene Ist-Fahrzeugverzögerungssignal als Anfangs-Fahrzeugverzögerungssignal erfaßt,
fb) die Summe aus dem Fahrzeugverzögerungs-Anforderungssignal und dem Anfangs-Fahrzeugverzogerungssignal bildet,
fc) das Bremsen-Betätigungssignal bei einer Abweichung zwischen dem Ist-Fahrzeugverzögerungssignal und der Summe aus dem Fahrzeugverzögerungs-Anforderungssignal und dem Anfangs-Fahrzeugverzögerungssignal abgibt.

4. Bremsanlage nach Anspruch 3, dadurch gekennzeichnet, daß der Verzögerungsgeber (5) und der Bremsbeginnsignalgeber (8) zu einem Kombigeber (7) vereinigt sind, der bei einer Betätigung durch den Fahrer aus dem unbetätigten Zustand heraus das Bremsbeginnsignal vor dem Fahrzeugverzögerungs-Anforderungssignal abgibt.

## Claims

1. A method for braking a vehicle, in which, during a braking action,
a) the vehicle driver produces a vehicle deceleration request signal by means of a deceleration transducer (5),
b) a deceleration sensor device (3 or 15, 18) produces an actual vehicle deceleration signal,
c) the vehicle deceleration request signal and the actual vehicle deceleration signal are supplied to a control unit (4),
d) the control unit (4) delivers a brake-actuation signal,
characterized in that
e) the driver produces a start-of-braking signal at the start of braking,
f) the start-of-braking signal is supplied to the control unit (4),
g) on receiving the start-of-braking signal the control unit (4) identifies the existing actual vehicle deceleration signal as the initial vehicle deceleration signal,
h) the control unit (4) forms the sum of the vehicle deceleration request signal and the initial vehicle deceleration signal,
i) the control unit (4) delivers the brake-actuation signal on deviation between the actual vehicle deceleration signal and the sum of the vehicle deceleration request signal and the initial vehicle deceleration signal.

2. A method according to claim 1, characterized in that the deceleration sensor device (15, 18) forms the actual vehicle deceleration signal from the rotational travel signal of at least one rotational travel sensor (18) determining the rotational travel of a vehicle wheel.

3. A brake system for implementing the method according to one of the preceding claims containing
a) a deceleration transducer (5) operated by the driver to deliver a vehicle deceleration request signal,
b) a deceleration sensor device (3 or 15, 18) determining the particular existing vehicle deceleration and producing a corresponding actual vehicle deceleration signal,
c) a control unit (4) connected to the deceleration transducer (5) and the deceleration sensor device (3 or 15, 18) and delivering a brake-actuation signal,
characterized by the features
e) a start-of-braking signal transducer (8) operated by the driver at the start of a braking action to produce a start-of-braking signal is provided;
f) the control unit (4) is connected to the start-of-braking signal transducer (8) and is constructed so that
fa) on receiving a start-of-braking signal it identifies the particular existing actual vehicle deceleration signal as the initial vehicle deceleration signal,
fb) it forms the sum of the vehicle deceleration request signal and the initial vehicle deceleration signal,
fc) it delivers the brake-actuation signal on deviation between the actual vehicle deceleration signal and the sum of the vehicle deceleration request signal and the initial vehicle deceleration signal.

4. A brake system according to claim 3, characterized in that the deceleration transducer (5) and the start-of-braking signal transducer (8) are combined to form a combined transducer (7) which on actuation by the driver from the unactuated state delivers the start-of-braking signal before the vehicle deceleration request signal.

## Revendications

1. Procédé pour le freinage d'un véhicule, dans lequel, lors d'un freinage
a) le conducteur, au moyen d'un émetteur de ralentissement (5), engendre un signal d'exigence de ralentissement de véhicule,
b) un agencement de capteur de ralentissement (3 ou 15, 18) engendre un signal de ralentissement de véhicule présent,
c) le signal d'exigence de ralentissement de véhicule et le signal de ralentissement de véhicule présent sont amenés à une unité de commande (4),
d) l'unité de commande (4) délivre un signal d'actionnement de freinage,
caractérisé en ce que
e) le conducteur, lors de commencement du freinage, engendre un signal de commencement de freinage,
f) le signal de commencement de freinage est amené à l'unité de commande (4),
g) l'unité de commande (4), lors de réception du signal de commencement de freinage, saisit le signal de ralentissement de véhicule présent justement présent comme signal de ralentissement de véhicule de début,
h) l'unité de commande (4) forme la somme du signal d'exigence de ralentissement de véhicule et du signal de ralentissement de véhicule de début,
i) l'unité de commande (4) délivre le signal d'actionnement de freinage, lors d'une divergence entre le signal de ralentissement de véhicule présent et la somme du signal d'exigence de ralentissement de véhicule et du signal de ralentissement de véhicule de début.

2. Procédé selon la revendication 1, caractérisé en ce que l'agencement de capteur de ralentissement (15, 18) forme le signal de ralentissement de véhicule présent à partir du signal de trajet de rotation d'au moins un capteur de trajet de rotation (18) saisissant le trajet de rotation d'une roue de véhicule.

3. Installation de freinage pour la mise en oeuvre du procédé selon une des précédentes revendications, contenant
a) un émetteur de ralentissement (5) actionné par le conducteur pour la délivrance d'un signal d'exigence de ralentissement de véhicule,
b) un agencement de capteurs de ralentissement (3 ou 15, 18) saisissant le ralentissement de véhicule présent chaque fois et engendrant un signal de ralentissement de véhicule présent correspondant,
c) une unité de commande (4) reliée avec l'émetteur de ralentissement (5) et l'agencement de capteur de ralentissement (3 ou 15, 18) et délivrant un signal d'actionnement de freinage,
caractérisé par les caractéristiques :
e) il est prévu un émetteur de signal de commencement de freinage (8) actionné par le conducteur, lors de commencement de freinage, pour la délivrance d'un signal de commencement de freinage ;
f) l'unité de commande (4) est reliée avec l'émetteur de signal de commencement de freinage (8), et est constituée de telle sorte, qu'elle
fa) lors de réception d'un signal de commencement de freinage, saisit le signal de ralentissement de véhicule présent justement présent comme signal de ralentissement de véhicule de début,
fb) forment la somme du signal d'exigence de ralentissement de véhicule et du signal de ralentissement de véhicule de début,
fc) délivrent le signal d'actionnement de freinage, lors d'une divergence entre le signal de ralentissement de véhicule présent et la somme du signal d'exigence de ralentissement de véhicule et du signal de ralentissement de véhicule de début.

4. Installation de freinage selon la revendication 3, caractérisée en ce que l'émetteur de ralentissement (5) et l'émetteur de signal de commencement de freinage (8) sont réunis en un émetteur combiné (7), qui, lors d'un actionnement par le conducteur, à partir de l'état non actionné, délivre le signal de commencement de freinage avant le signal d'exigence de ralentissement de véhicule.
